# EUROPÄISCHE PATENTANMELDUNG

(11) **EP 3 309 934 A1**
(43) Veröffentlichungstag der Anmeldung: **18.04.2018**
(21) Anmeldenummer: 17188143.6
(22) Anmeldetag: 28.08.2017
(51) Int. Cl.: H02K 3/52, H02K 3/493, H02K 15/00

(54) **ELEKTRISCHE MASCHINE**

(30) Priorität: 11.10.2016 DE 102016219739
(71) Anmelder: Baumüller Nürnberg GmbH, 90482 Nürnberg (DE)
(72) Erfinder: DEÁK, Csaba Zsolt, 90482 Nürnberg (DE); BRAUNEISER, Hans-Jürgen, 90765 Fürth (DE)
(74) Vertreter: FDST Patentanwälte

(57) **Zusammenfassung**

Die Erfindung betrifft eine elektrische Maschine (10) mit einem in eine Axialrichtung (A) gestapelten ersten Blechpaket (30), das eine sich in Axialrichtung (A) erstreckende Nut (32) aufweist. Innerhalb der Nut (32) ist zumindest teilweise eine elektrische Spule (48) angeordnet, und die Nut (32) ist mittels eines Nutverschlusses (50) zumindest teilweise verschlossen. Der Nutverschluss (50) weist ein in Radialrichtung (R) gestapeltes zweites Blechpaket (52) auf.

## Beschreibung

Die Erfindung betrifft eine elektrische Maschine. Unter elektrische Maschine wird ein Elektromotor oder insbesondere ein Generator verstanden.

Elektrische Maschinen weisen üblicherweise eine Anzahl an elektrischen Spulen auf, mittels derer ein Elektromagnet bereitgestellt ist, sofern die elektrische Maschine ein Elektromotor ist. Falls die elektrische Maschine als Generator verwendet wird, wird bei Betrieb in die elektrischen Spulen eine elektrische Spannung induziert. Die elektrischen Spulen sind üblicherweise an einem Blechpaket befestigt, was die mechanische Stabilität erhöht. Auch wird mittels des Blechpakets, welches aus einem ferromagnetischen Material erstellt ist, das jeweilige Magnetfeld, welches mittels der elektrischen Spule erstellt wird, bzw. welches diese durchsetzen soll, geeignet geformt. Um diese Anforderungen zu erfüllen, weist das Blechpaket meist eine Anzahl an sogenannten Zähnen auf, welche in Axialrichtung verlaufende Vorsprünge sind. Jede der elektrischen Spulen ist hierbei um jeweils einen der Zähne gewickelt, die mittels Nuten voneinander beabstandet sind. Folglich liegt jede der elektrischen Spulen teilweise innerhalb einer der Nuten ein.

Sofern die Zähne einen im Wesentlichen rechteckförmigen Querschnitt aufweisen, ist es möglich, die elektrischen Spulen unabhängig von dem Blechpaket zu fertigen und zur Montage auf den jeweiligen Zahn aufzustecken. Dies führt zu verringerten Herstellungskosten sowie einer vergleichsweise effizienten Ausfüllung der Nuten mittels der entsprechend gefertigten elektrischen Spulen. Zudem ist bei Betrieb eine vergleichsweise effiziente Abfuhr von entstehender Verlustwärme aus der jeweiligen Nut ermöglicht, was die Zuverlässigkeit erhöht. Um eine vergleichsweise hohe mechanische Stabilität zu gewährleisten und ein Ablösen der elektrischen Spulen von den Zähnen zu vermeiden, weisen die Zähne meist eine größere Höhe auf als die jeweiligen elektrischen Spulen, sodass die Nuten in deren Öffnungsbereich meist mittels Luft befüllt sind. Infolgedessen können die Magnetfelder in diesem Bereich nicht geeignet geformt werden, was den Wirkungsgrad herabsetzt.

In einer Alternative hierzu sind die Zähne endseitig verbreitert, sodass die Öffnung der jeweiligen Nuten verringert sind. Somit kann mittels der verbreiterten Enden der Zähne die Magnetfelder geeignet geformt werden. Aufgrund der verringerten Nutöffnungen können jedoch die elektrischen Spulen nicht mehr separat erstellt und auf die Zähne aufgesteckt werden. Infolgedessen müssen diese auf das bereits erstellte Blechpaket gewickelt werden, wobei der jeweilige Draht durch die verringerte Nutöffnung eingebracht werden muss. Dies bedingt erhöhte Herstellungskosten. Auch ist infolgedessen die Geometrie der elektrischen Spule nicht mehr frei wählbar, weswegen die Nuten lediglich teilweise mittels der elektrischen Spulen befüllt werden können, sodass der Füllungsgrad der Nuten verringert ist.

Der Erfindung liegt die Aufgabe zugrunde, eine besonders geeignete elektrische Maschine anzugeben, wobei insbesondere Herstellungskosten gesenkt und vorzugsweise ein Wirkungsgrad erhöht ist.

Erfindungsgemäß wird diese Aufgabe durch die Merkmale des Anspruches 1 gelöst. Vorteilhafte Weiterbildungen und Ausgestaltungen sind Gegenstand der Unteransprüche.

Die elektrische Maschine ist beispielsweise ein Elektromotor, insbesondere ein bürstenloser Elektromotor, wie ein bürstenloser Gleichstrommotor (BLDC). Zweckmäßigerweise jedoch ist die elektrische Maschine ein Generator, der vorzugsweise bürstenlos ausgestaltet ist. Zweckmäßigerweise weist die elektrische Maschine einen Rotor auf, der drehbar um eine Rotationsachse gelagert ist. Die Rotationsachse definiert hierbei eine Axialrichtung. Mit anderen Worten ist die Axialrichtung parallel zur Rotationsachse. Die elektrische Maschine ist vorzugsweise vorgesehen, dass der Rotor im Normalbetrieb eine vergleichsweise geringe Drehgeschwindigkeit aufweist. Insbesondere ist die Nenngeschwindigkeit kleiner als 500 Umdrehungen pro Minute (U/min), 200 U/min, 100 U/min oder 50 U/min. Geeigneterweise ist die maximale Drehgeschwindigkeit kleiner als 1.000 U/min, 500 U/min, 200 U/min oder 100 U/min.

Die elektrische Maschine weist ein erstes Blechpaket auf, welches in Axialrichtung gestapelt ist. Mit anderen Worten umfasst das erste Blechpaket eine Anzahl an Blechen, deren Hauptausdehnungsrichtung senkrecht zur Axialrichtung ist, und die in Axialrichtung aneinandergefügt, beispielsweise stanzpaketiert oder geklebt sind. Die Anzahl der Bleche des ersten Blechpakets ist vorzugsweise größer als 20 Bleche, 50 Bleche, 100 Bleche, 200 Bleche oder 500 Bleche. Beispielsweise ist die Anzahl der Bleche des ersten Blechpakets gleicher oder gleich 1000 Bleche, 800 Bleche oder 500 Bleche. Die Bleche des ersten Blechpakets sind beispielsweise aus einem ferromagnetischen Material, beispielsweise Eisen oder einem Stahl gefertigt, insbesondere Elektroblech, Trafoblech oder DC04. Die einzelnen Bleche des ersten Blechpakets sind bevorzugt elektrisch gegeneinander isoliert, um eine Induzierung von Wirbelströmen zu vermeiden, was den Wirkungsgrad verringern würde.

Das erste Blechpaket weist eine sich in Axialrichtung erstreckende Nut auf. Die Nut selbst verläuft bevorzugt im Wesentlichen (+/-10°, 5°, 2°oder 0° Abweichung) in eine Radialrichtung, die insbesondere mittels der Rotationsachse definiert ist. Mit anderen Worten ist die Nut auf die Rotationsachse oder von dieser weggerichtet. Die Nut weist bevorzugt einen rechteckförmigen Querschnitt senkrecht zur Axialrichtung auf. Der Querschnitt ist zweckmäßigerweise in Axialrichtung konstant. Mit anderen Worten weist die Nut stets den gleichen Querschnitt senkrecht zur Axialrichtung auf, unabhängig an welcher Position der Querschnitt erstellt ist. Insbesondere weist das erste Blechpaket über dessen vollständige Länge in Axialrichtung die Nut auf. Die Nut ist insbesondere eine Aussparung innerhalb des ersten Blechpakets, wobei die Aussparung eine Öffnung aufweist. Mit anderen Worten weist das erste Blechpaket an dessen Umfang die Nut auf, welche somit teilweise die Oberfläche des ersten Blechpakets bildet. Zusammenfassend weist die Nut eine Öffnung auf.

Innerhalb der Nut ist zumindest teilweise eine elektrische Spule angeordnet. Die elektrische Spule weist zweckmäßigerweise eine Anzahl von Windungen auf, wobei insbesondere jede der Windungen teilweise innerhalb der Nut angeordnet ist. Zweckmäßigerweise weist derjenige Abschnitt der elektrischen Spule, der innerhalb der Nut angeordnet ist, einen Verlauf in Axialrichtung auf. Die elektrische Spule ist beispielsweise aus einem Lackdraht erstellt, insbesondere einem Kupferlackdraht oder einem Aluminiumlackdraht. Mit anderen Worten wird zur Erstellung der elektrischen Spule zunächst ein Draht aus einem Kupfer, insbesondere reines Kupfer oder eine Kupferlegierung, oder aus einem Aluminium, insbesondere reines Aluminium oder eine Aluminiumlegierung, erstellt. Der Draht ist anschließend mittels eines Lackes überzogen, wobei der Lack elektrisch isolierende Eigenschaften aufweist.

Die Nut ist zumindest teilweise mittels eines Nutverschlusses verschlossen. Die elektrische Spule befindet sich hierbei zwischen dem Nutverschluss und einem Boden der Nut, sodass aufgrund des Nutverschlusses ein Entfernen der elektrischen Spule aus der Nut in einer Richtung senkrecht zur Axialrichtung aufgrund des Nutverschlusses verhindert oder zumindest erschwert ist. Zweckmäßigerweise ist der Nutverschluss ein separates Bauteil zu dem ersten Blechpaket und ist im Montagezustand zweckmäßigerweise an dem ersten Blechpaket angebunden, geeigneterweise an diesem gehalten. Der Nutverschluss selbst weist ein zweites Blechpaket auf. Beispielsweise besteht der Nutverschluss aus dem zweiten Blechpaket. Das zweite Blechpaket selbst umfasst eine Anzahl an einzelnen Blechen, wobei die Anzahl der Bleche des zweiten Blechpakets vorzugsweise geringer als die Anzahl der Bleche des ersten Blechpakets, geringer als die Hälfte der Anzahl der Bleche des ersten Blechpakets oder geringer als ein Viertel der Anzahl der Bleche des ersten Blechpakets ist. Beispielsweise ist die Anzahl der Bleche des zweiten Blechpakets zwischen 2 Blechen und 50 Blechen, zwischen 5 Blechen und 50 Blechen. Beispielsweise ist die Anzahl der Bleche kleiner oder gleich 20 Bleche oder 10 Bleche. Das zweite Blechpaket ist vergleichsweise kostengünstig herstellbar, sodass die Herstellungskosten des Nutverschlusses verringert sind. Auf diese Weise sind die Herstellungskosten der elektrischen Maschine reduziert.

Die Bleche des zweiten Blechpakets sind geeigneterweise aus einem ferromagnetischen Material gefertigt, insbesondere aus einem Elektroblech, Trafoblech oder DC04. Vorzugsweise sind die Bleche des zweiten Blechpakets aus dem gleichen Material gefertigt wie die Bleche des ersten Blechpakets, vorzugsweise aus dem gleichen Rohmaterial. Auf diese Weise kann das erste Blechpaket im Wesentlichen gleichzeitig mit dem zweiten Blechpaket gefertigt werden oder zumindest mittels des gleichen Rohblechs, was Herstellungskosten reduziert und einen Verschnitt senkt.

Die Bleche des zweiten Blechpakets sind in Radialrichtung gestapelt. Mit anderen Worten ist die Hauptausdehnungsrichtung der Bleche des zweiten Blechpakets senkrecht zur Radialrichtung. Folglich ist die Stapelrichtung der Bleche des zweiten Blechpakets senkrecht zur Axialrichtung. Vorzugsweise sind die Bleche des zweiten Blechpakets gegeneinander elektrisch isoliert. Die Bleche des zweiten Blechpakets sind vorzugsweise aneinandergefügt, beispielsweise mittels Stanzpaketierung oder mittels Klebens.

Zweckmäßigerweise weist das zweite Blechpaket eine Ausdehnung in Axialrichtung auf, die insbesondere größer als 90% oder 95% der Ausdehnung der Nut in Axialrichtung ist. Zweckmäßigerweise entspricht die Ausdehnung des zweiten Blechpakets in Axialrichtung der Ausdehnung der Nut in Axialrichtung. Geeigneterweise ist die Ausdehnung des zweiten Blechpakets in Tangentialrichtung gleich der Ausdehnung der Nut in Tangentialrichtung oder größer als diese. Mit anderen Worten überlappt das zweite Blechpaket die Nut in Tangentialrichtung. Beispielsweise weist das zweite Blechpaket, und insbesondere der Nutverschluss, eine Ausdehnung in Radialrichtung auf, die kleiner als 10% des Verlaufs der Nut in Radialrichtung ist. Insbesondere ist die Ausdehnung in Radialrichtung zwischen 50% und 2% der Nut in Radialrichtung, zwischen 20% und 5% oder zwischen 10 % und 7%. Beispielsweise ist der Abstand zwischen dem zweiten Blechpaket und der elektrischen Spule in Radialrichtung vorzugsweise geringer als die doppelte Dicke eines Blechs des zweiten Blechpakets in Radialrichtung, gleich der Dicke eines Blechs des zweiten Blechpakets in Radialrichtung oder der Hälfte der Dicke eines Blechs des zweiten Blechpakets in Radialrichtung.

Aufgrund des Nutverschlusses ist es ermöglicht, dass die elektrische Spule zunächst gefertigt und im Anschluss hieran in die Nut eingebracht wird, wobei die Nut eine vergleichsweise große Öffnung aufweist. Aufgrund des Nutverschlusses wird die elektrische Spule innerhalb der Nut gesichert, was eine Stabilität und folglich eine Zuverlässigkeit erhöht. Da die elektrische Spule unabhängig von dem ersten Blechpaket gefertigt werden kann, sind Herstellungskosten reduziert. Auch kann die elektrische Spule mit einer bestimmten Geometrie gefertigt werden, sodass die Nut zu einem vergleichsweise großen Anteil mittels der elektrischen Spule befüllt ist. Folglich sind somit lediglich geringe Zwischenräume vorhanden, die nicht mit der elektrischen Spule gefüllt sind.

Die Öffnung der Nut ist folglich zumindest teilweise mittels des Nutverschlusses verschlossen. Mit anderen Worten ist die Öffnung der Nut mittels des Nutverschlusses befüllt. Aufgrund des zweiten Blechpakets wird das Magnetfeld im Bereich der Nut geeignet geformt, was einen Wirkungsgrad der elektrischen Maschine erhöht. Beispielsweise ist die Öffnung mittels des Nutverschlusses vollständig verschlossen. Alternativ befindet sich der Nutverschluss lediglich in einem bestimmten Bereich der Öffnung der Nut, sodass auch weiterhin eine Luftzirkulation in die Nut und aus dieser heraus ermöglicht ist. Insbesondere ist die Öffnung der Nut zumindest teilweise mittels des Nutverschlusses begrenzt. Beispielsweise ist der Nutverschluss an einer Seitenwand der Nut angebunden.

Die elektrische Maschine weist insbesondere eine Leistung zwischen 100 Watt und 20 Kilowatt (kW), zwischen 200 Watt und 10 kW, zwischen 5 Watt und 5 kW und beispielsweise 1 kW auf. Vorzugsweise ist die Leistung der elektrischen Maschine größer oder gleich 1 kW, 5 kW, 10 kW, 20 kW, 30kW, oder 50 kW. Ein einer weiteren Alternative ist die Leistung größer als 60kW, 80 kW oder 100 kW. Zum Beispiel ist die elektrische Maschine ein Bestandteil einer Industrieanlage, und die elektrische Maschine ist geeigneterweise vorgesehen und eingerichtet, einen Aktor oder ein Förderband anzutreiben. Besonders bevorzugt ist die elektrische Maschine ein Bestandteil einer Windkraftanlage. Im Montagezustand ist die elektrische Maschine vorzugsweise mit einem Drehflügelrotor der Windkraftanlage gekoppelt und wird mittels dessen angetrieben, beispielsweise mittels eines Getriebes oder direkt. Hierfür ist die elektrische Maschine insbesondere geeignet, zweckmäßigerweise vorgesehen und eingerichtet. Beispielsweise umfasst die elektrische Maschine einen elektrischen Anschluss zum Anschluss an einen Umrichter, mittels dessen eine induzierte elektrische Spannung geeignet transformiert wird oder mittels dessen, sofern die elektrische Maschine ein Elektromotor ist, eine elektrische Spannung bzw. ein elektrischer Strom zum Betrieb bereitgestellt ist.

Beispielsweise ist das erste Blechpaket zumindest im Bereich einer Anlage des Nutverschlusses an dem ersten Blechpaket mit einer elektrischen Isolierung versehen. Zweckmäßigerweise weist der Nutverschluss eine elektrische Isolierung auf, mittels derer das erste Blechpaket und das zweite Blechpaket elektrisch isoliert sind. Die elektrische Isolierung ist beispielsweise aus einem Kunststoff gefertigt. Insbesondere umgibt die elektrische Isolierung das zweite Blechpaket vollständig. Auf diese Weise ist das zweite Blechpaket gegen eine etwaige Korrosion geschützt. Alternativ hierzu befindet sich die elektrische Isolierung vorzugsweise lediglich im Bereich einer Anlage des Nutverschlusses an dem ersten Blechpaket, was einen Materialbedarf reduziert. Beispielsweise ist die elektrische Isolierung an dem zweiten Blechpaket angebunden, insbesondere auf dieses aufgetragen. Zweckmäßigerweise ist die elektrische Isolierung in einem Spritzgussverfahren erstellt, und das zweite Blechpaket ist mit einem Kunststoff zumindest teilweise umspritzt. Alternativ hierzu ist die elektrische Isolierung nach Art eines Lackes aufgetragen. Insbesondere besteht der Nutverschluss aus dem zweiten Blechpaket und der elektrischen Isolierung. Aufgrund der elektrischen Isolierung werden elektrische Kurzschlüsse zwischen den Blechen des ersten Blechpakets vermieden. Auch werden elektrische Kurzschlüsse zwischen den Blechen des zweiten Blechpakets vermieden. Infolgedessen ist eine Ausbreitung von parasitären Wirbelströmen verhindert, was den Wirkungsgrad der elektrischen Maschine erhöht.

Der Nutverschluss ist zweckmäßigerweise an dem ersten Blechpaket angebunden, vorzugsweise an diesem befestigt. Z.B. ist der Nutverschluss und das erste Blechpaket verklebt. Besonders bevorzugt jedoch umfasst die Nut eine sich in Axialrichtung erstreckende Vertiefung, die sich zweckmäßigerweise im Bereich der Nutöffnung befindet. Die Vertiefung ist insbesondere nutartig ausgestaltet und verläuft vorzugsweise senkrecht zur Axialrichtung und/oder senkrecht zum Verlauf der Nut. Insbesondere verläuft die Vertiefung im Wesentlichen in Tangentialrichtung. Beispielsweise weist eine Seitenwand der Nut die Vertiefung auf.

Innerhalb der Vertiefung ist der Nutverschluss zumindest teilweise angeordnet. Zweckmäßigerweise ist der Nutverschluss in die Vertiefung eingeschoben. Insbesondere wird zur Montage der Nutverschluss in Axialrichtung in die Vertiefung eingeschoben. Geeigneterweise ist zwischen dem Nutverschluss und der Vertiefung eine Press- oder Spielpassung erstellt, sodass der Nutverschluss mittels der Vertiefung vergleichsweise sicher gehalten ist. Die Vertiefung umgreift zweckmäßigerweise ein tangentiales Ende des Nutverschlusses und stabilisiert diesen folglich. Mit anderen Worten liegt das tangentiale Ende des Nutverschlusses innerhalb der Vertiefung ein. Zweckmäßigerweise weist die Nut die Vertiefung über deren vollständige Ausdehnung in Axialrichtung auf, und der Nutverschluss liegt über dessen vollständiger Länge in Axialrichtung in der Vertiefung ein.

Zum Beispiel umfassen beide Seitenwände der Nut jeweils eine Vertiefung, wobei der Abstand der beiden Vertiefungen zu einem Boden der Nut vorzugsweise gleich ist. Innerhalb der beiden Vertiefungen ist insbesondere der Nutverschluss angeordnet und vorzugsweise in diese eingeschoben. Mit anderen Worten liegt der Nutverschluss jeweils endseitig in den beiden Vertiefungen ein, die folglich das tangentiale Ende des Nutverschlusses jeweils umgreifen.

Beispielsweise ist mittels des Nutverschlusses die Nut vollständig verschlossen. Hierfür ist insbesondere das zweite Blechpaket massiv ausgestaltet. Besonders bevorzugt jedoch weist der Nutverschluss eine in Radialrichtung verlaufende Aussparung auf. Die Aussparung verläuft insbesondere durch den Nutverschluss hindurch, sodass dieser mittels der Aussparung geöffnet ist. Zweckmäßigerweise ist der Verlauf der Aussparung parallel zum Verlauf der Nut. Die Aussparung ist vorzugsweise umfangsseitig geschlossen. Die Aussparung weist vorzugsweise einen viereckigen Querschnitt senkrecht zur Radialrichtung auf. Beispielsweise ist der Querschnitt trapezförmig, rechteckförmig oder quadratisch. Aufgrund der Aussparung weist die elektrische Maschine im Wesentlichen die gleichen (magnetischen) Eigenschaften auf wie eine elektrische Maschine mit einer halb geschlossenen Nut. Insbesondere wird aufgrund der Aussparung ein Rastmoment des etwaigen Rotors eingestellt. Auch ist aufgrund der Aussparung eine Luftzirkulation in die Nut hinein und aus dieser heraus ermöglicht, was zu einer vergleichsweise effektiven Kühlung der elektrischen Spule bei Betrieb führt.

Zweckmäßigerweise umfasst der Nutverschluss eine Anzahl derartiger Aussparungen, die zueinander insbesondere in Axialrichtung benachbart angeordnet sind, wobei benachbarte Aussparungen zueinander beabstandet sind. Zwischen benachbarten Aussparungen sind insbesondere Stege vorhanden, die vorzugsweise zumindest teilweise, geeigneterweise vollständig, mittels des zweiten Blechpakets gebildet sind. Zweckmäßigerweise weist das zweite Blechpaket die Aussparung bzw. die Aussparungen sowie infolgedessen die Stege auf. Aufgrund der Stege sind Verluste aufgrund einer Ummagnetisierung innerhalb des Nutverschlusses, insbesondere innerhalb des zweiten Blechpakets verringert, sofern ein Magnet im Bereich des Nutverschlusses bewegt wird. Insbesondere weist der Nutverschluss eine zur Anzahl der Aussparungen korrespondierende Anzahl an Segmenten auf, wobei jedes der Segmente eine der Aussparungen umfasst. Die Segmente sind bevorzugt baugleich. Zweckmäßigerweise ist der Nutverschluss mittels der Segmente gebildet. Mittels Hinzufügen oder Entfernen eines derartigen Segments kann der Nutverschluss somit für unterschiedliche elektrische Maschinen herangezogen werden, deren Ausdehnung in Axialrichtung sich um eben eine Länge eines Segments unterscheidet.

Beispielsweise entspricht die Ausdehnung der Aussparung in Axialrichtung der Ausdehnung in Axialrichtung eines Permanentmagneten, der bei Betrieb in Tangentialrichtung bezüglich der Aussparung verbracht wird. Zumindest jedoch weichen die beiden Abstände voneinander um weniger als 5%, 2% oder 1 % ab. Zweckmäßigerweise befinden sich die Aussparung und der Permanentmagnet an der gleichen Position in Axialrichtung. Sofern der Nutverschluss mehrere Aussparungen aufweist, umfasst die elektrische Maschine vorzugsweise mehrere Magnete. Hierbei ist beispielsweise die Anzahl der Permanentmagneten gleich der Anzahl der Aussparungen, und vorzugsweise ist jede der Aussparungen einem der Permanentmagneten zugeordnet.

Beispielsweise erstreckt sich die Aussparung parallel zur Axialrichtung. Insbesondere erstrecken sich Begrenzungsflächen der Aussparung in Axialrichtung. Alternativ hierzu erstreckt sich die Aussparung schräg zur Axialrichtung. Mit anderen Worten weisen die Seitenflächen sowohl eine Komponente in Axialrichtung als auch in Tangentialrichtung auf. Auf diese Weise ist es ermöglicht, ein Rastmoment des Rotors zu reduzieren.

Beispielsweise weisen sämtliche Bleche des zweiten Blechpakets die gleiche Form auf und die Kanten sämtlicher Bleche fluchten miteinander. Auf diese Weise ist eine Herstellung des zweiten Blechpakets vereinfacht, da diese beispielsweise mittels des gleichen Werkzeugs aus einem Blechstreifen gestanzt werden können. Auch ist eine Lagerhaltung derartiger zweiter Blechpakete vereinfacht. Alternativ hierzu weist das zweite Blechpaket ein erstes Blech mit einer ersten Form und ein zweites Blech mit einer zweiten Form auf, wobei sich die erste Form und die zweite Form unterscheiden. Auf diese Weise weist das zweite Blechpaket im Bereich des ersten Blechs unterschiedliche magnetische Eigenschaften als im Bereich des zweiten Blechs auf. Folglich kann mittels des zweiten Blechpakets ein Verlauf von etwaigen Magnetfeldlinien bei Betrieb effizienter eingestellt werden. Auch kann das zweite Blech zur Befestigung des Nutverschlusses an dem ersten Blechpaket herangezogen werden, wohingegen das erste Blech diese Funktionalität nicht aufweist. Beispielsweise umfasst das zweite Blechpaket mehrere erste Bleche und mehrere zweite Bleche. Beispielsweise ist die Anzahl der ersten Bleche gleich der Anzahl der zweiten Bleche. Geeigneterweise ist die Anzahl der ersten Bleche zwischen 2 ersten Blechen und 20 ersten Blechen oder zwischen 5 ersten Blechen und 10 ersten Blechen. Alternativ oder in Kombination hierzu ist die Anzahl der zweiten Bleche zwischen 2 zweiten Blechen und 20 zweiten Blechen oder zwischen 5 zweiten Blechen und 10 zweiten Blechen.

Vorzugsweise weist das zweite Blech eine größere Ausdehnung in Tangentialrichtung auf als das erste Blech. Infolgedessen weist das zweite Blechpaket in Tangentialrichtung ein gestuftes Ende auf, was eine Montage vereinfacht, insbesondere sofern die Nut die Vertiefung aufweist. Beispielsweise liegt hierbei das zweite Blechpaket lediglich im Bereich der zweiten Bleche innerhalb der Vertiefung ein, wohingegen die ersten Bleche nicht in der Vertiefung angeordnet sind, sofern diese vorhanden ist. Beispielsweise ist die elektrische Spule in direktem mechanischem Kontakt mit einem der ersten Bleche des zweiten Blechpakets. Alternativ hierzu ist das zweite Blech zwischen dem ersten Blech und der elektrischen Spule angeordnet. Vorzugsweise ist die Öffnung der Nut mittels eines der ersten Bleche bzw. mittels des ersten Blechs befüllt. Aufgrund der unterschiedlichen Ausbildung in Tangentialrichtung ist es ermöglicht, die Nut mit vergleichsweise vielen Blechen des zweiten Blechpakets zu befüllen, sodass die Nut im Wesentlichen vollständig entweder mittels der elektrischen Spule oder mittels des zweiten Blechpakets bzw. des Nutverschlusses ausgefüllt ist.

Beispielsweise umfasst das zweite Blechpaket ein drittes Blech, viertes Blech oder fünftes Blech, wobei die Form der einzelnen Bleche sich unterscheidet. Zweckmäßigerweise weist das zweite Blechpaket jeweils eine Anzahl derartiger dritter, vierter bzw. fünfter Bleche auf. Insbesondere ist die Ausdehnung des dritten Blechs in Tangentialrichtung größer als die Ausdehnung des zweiten Blechs, die Ausdehnung des vierten Blechs in Tangentialrichtung ist größer als die des dritten Blechs und die Ausdehnung des fünften Blechs in Tangentialrichtung ist größer als die Ausdehnung des vierten Blechs in Tangentialrichtung, sofern diese vorhanden sind.

Beispielsweise weist der Nutverschluss eine von der elektrischen Spule wegweisende Oberfläche auf, die plan ist. Mit anderen Worten erstreckt sich diese Oberfläche im Wesentlichen in Axial- und Tangentialrichtung. Insbesondere weist das zweite Blechpaket eine derartige plane Oberfläche auf. Auf diese Weise ist eine Erstellung sowie Lagerhaltung des Nutverschlusses vereinfacht. Alternativ oder in Kombination hierzu weist der Nutverschluss eine zur elektrischen Spule weisende plane Oberfläche auf, die vorzugsweise im Wesentlichen parallel zu der von der Spule wegweisenden Oberfläche ist. Folglich ist der Nutverschluss, insbesondere das zweite Blechpaket, im Wesentlichen quaderförmig ausgestaltet, mit Ausnahme eines etwaigen stufenförmigen Rands in Tangentialrichtung und/oder der etwaigen Aussparung bzw. der Aussparungen. Folglich ist eine Lagerung des Nutverschlusses vereinfacht.

Alternativ hierzu ist die Oberfläche des Nutverschlusses bzw. des zweiten Blechpakets, die von der elektrischen Spule weg weist, gewölbt, wobei die Wölbung beispielsweise zur elektrischen Spule hin gerichtet ist. Geeigneterweise ist die Wölbung ein Kreisbogen, dessen Mittelpunkt insbesondere auf der etwaigen Rotationsachse des Rotors liegt. Alternativ hierzu ist der Mittelpunkt des Kreisbogens von der Rotationsachse zum Nutverschluss hin versetzt. Zweckmäßigerweise ist die zur elektrischen Spule weisende Oberfläche des Nutverschlusses bzw. des zweiten Blechpakets gewölbt, wobei die Wölbung vorzugsweise ein Kreisbogen ist, dessen Mittelpunkt beispielsweise auf der Rotationsachse liegt oder von diesem in Richtung des Nutverschlusses versetzt ist. Aufgrund der Wölbung ist es ermöglicht, einen etwaigen Luftspalt zwischen einem Stator und dem etwaigen Rotor der elektrischen Maschine im Wesentlichen konstant zu halten, was die magnetischen Eigenschaften verbessert, und folglich zu einem erhöhten Wirkungsgrad führt.

Beispielsweise sind das erste Blechpaket und der das zweite Blechpaket umfassende Nutverschluss sowie die elektrische Spule Bestandteile des Rotors der elektrischen Maschine. Besonders bevorzugt jedoch ist das erste Blechpaket, ebenso wie der Nutverschluss, der das zweite Blechpaket aufweist, sowie die elektrische Spule Bestandteile eines Stators. Der Stator umgibt insbesondere den Rotor der elektrischen Maschine umfangsseitig. Mit anderen Worten handelt es sich bei der elektrischen Maschine um einen Innenläufer. Zweckmäßigerweise ist hierbei die Nut radial nach innen gerichtet. Mit anderen Worten ist der Boden der Nut von dem Rotor nach außen hin versetzt, und die Öffnung der Nut befindet sich bezüglich des Bodens radial nach innen versetzt. Auf diese Weise ist das mittels der elektrischen Spule erstellte Magnetfeld vergleichsweise effizient gelenkt, und die elektrische Spule ist aufgrund des ersten Blechpakets vor Beschädigung geschützt. Besonders bevorzugt weist der Rotor einen Permanentmagneten auf, der beispielsweise bezüglich der Rotationsachse in Radialrichtung oder Tangentialrichtung angeordnet ist. Besonders bevorzugt ist der Permanentmagnet in Radialrichtung magnetisiert. Zweckmäßigerweise umfasst der Rotor eine Anzahl derartiger Permanentmagneten, die beispielsweise zueinander in Tangentialrichtung beabstandet und/oder drehsymmetrisch bezüglich der Rotationsachse angeordnet sind.

Zweckmäßigerweise weist das erste Blechpaket eine sich in Axialrichtung erstreckende zweite Nut auf. Zwischen der Nut und der zweiten Nut ist ein Zahn angeordnet, der folglich die Nut sowie die zweite Nut teilweise begrenzt. Insbesondere bilden jeweils eine der Seitenflächen der Nut bzw. der zweiten Nut eine der Seitenflächen des Zahns, der in Tangentialrichtung folglich zwischen der Nut und der zweiten Nut angeordnet ist. Innerhalb der zweiten Nut ist zumindest teilweise die elektrische Spule angeordnet, und die elektrische Spule ist um den Zahn gewickelt. Beispielsweise wird die elektrische Spule mittels Wickeln eines Lackdrahts um den Zahn erstellt. Alternativ hierzu wird die elektrische Spule gefertigt und nach der Fertigung auf den Zahn gesteckt, was Herstellungskosten verringert. Nachdem die elektrische Spule auf den Zahn gesteckt ist, wird insbesondere der Nutverschluss montiert. Beispielsweise ist die zweite Nut ebenfalls mittels eines Nutverschlusses zumindest teilweise verschlossen, wobei dieser Nutverschluss insbesondere baugleich zu dem Nutverschluss ist, der der Nut zugeordnet ist.

Vorzugsweise weist die elektrische Maschine eine Anzahl derartiger elektrischer Spulen auf, beispielsweise zwischen 4 elektrischen Spulen und 20 elektrischen Spulen, 6 elektrischen Spulen und 12 elektrischen Spulen und beispielsweise 8 elektrische Spulen oder 10 elektrische Spulen. Alternativ ist die Anzahl der Spulen 12, 24, 48, 60, 72, 85 oder 96. Zweckmäßigerweise ist die Anzahl der Spulen gleich einem ganzzahligen Vielfachen von 12. Auf diese Weise ist eine Welligkeit eines Drehmomentverlaufs, sofern die elektrische Maschine ein Elektromotor ist, oder eine Welligkeit innerhalb der induzierten elektrischen Spannung reduziert, sofern die elektrische Maschine ein Generator ist. Beispielsweise sind die elektrischen Spulen in Tangentialrichtung zueinander beabstandet. Mit anderen Worten ist jeder der elektrischen Spulen insbesondere eine Nut zugeordnet, vorzugsweise eine Nut und eine zweite Nut. Mit anderen Worten weist die elektrische Maschine genauso viele Nuten und zweite Nuten auf, wie elektrische Spulen. Somit umfasst die elektrische Maschine die doppelte Anzahl an Nuten als an elektrischen Spulen, und jeder elektrischen Spule sind zwei Nuten, nämlich eine erste Nut und eine zweite Nut, zugeordnet, wobei jeder Nut zweckmäßigerweise lediglich eine einzige elektrischen Spule zugeordnet ist. Alternativ hierzu sind jeweils in einer der Nuten zwei der elektrischen Spulen zumindest teilweise angeordnet. Mit anderen Worten ist jeder Nut bzw. jeder zweiten Nut, sofern diese vorhanden sind, jeweils zwei der elektrischen Spule zugeordnet. Folglich sind jeder elektrischen Spule zwei weitere elektrische Spulen zugeordnet.

Die Erfindung betrifft ferner insbesondere einen Stator mit dem ersten Blechpaket, und mit dem Nutverschluss sowie einen Nutverschluss. Die Erfindung betrifft ferner eine Windkraftanlage mit einer derartigen elektrischen Maschine, eine Spritzgussmaschine mit einer derartigen elektrischen Maschine, einen Antrieb einer Industrieanlage, mit einer derartigen elektrischen Maschine, einen Förderantrieb, insbesondere einer Industrieanlage, mit einer derartigen elektrischen Maschine oder ein Kraftfahrzeug mit einer derartigen elektrischen Maschine. Insbesondere wird eine derartige elektrische Maschine im Bereich einer Industrieanlege, eines Förderers oder im Bereich der E-Mobility verwendet.

Nachfolgend wird die Erfindung anhand einer Zeichnung näher erläutert. Darin zeigen:
- Fig. 1: schematisch vereinfacht eine Windkraftanlage mit einer elektrischen Maschine,
- Fig. 2: perspektivisch ausschnittsweise einen Stator der elektrischen Maschine mit zwei Nutverschlüssen,
- Fig. 3 bis 9: jeweils perspektivische Ausführungsformen des Nutverschlusses,
- Fig. 10: in einer Schnittdarstellung senkrecht zu einer Axialrichtung den an einem ersten Blechpaket montierten Nutverschluss, und
- Fig. 11: gemäß Fig. 10 eine weitere Ausgestaltungsform des Stators.

Einander entsprechende Teile sind in allen Figuren mit den gleichen Bezugszeichen versehen.

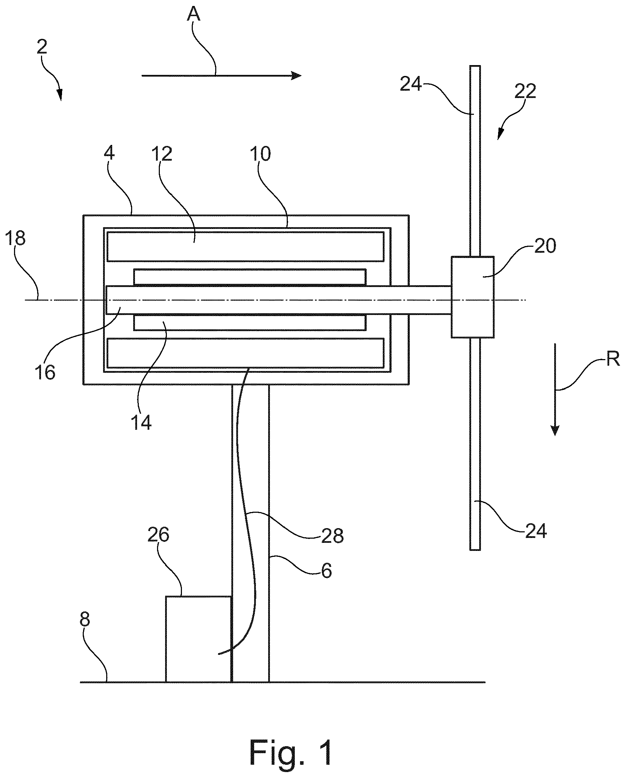

In Fig. 1 ist eine Windkraftanlage 2 schematisch vereinfacht in einer Schnittdarstellung gezeigt. Die Windkraftanlage 2 weist ein Gehäuse 4 auf, welches mittels eines Masts 6 oberhalb des Erdbogens 8 gehalten wird. Innerhalb des Gehäuses 4 ist eine elektrische Maschine 10 angeordnet, die einen im Wesentlichen hohlzylindrischen Stator 12 aufweist, der umfangsseitig einen ebenfalls hohlzylindrisch ausgestalteten Rotor 14 umgibt. Der Rotor 14 weist eine Anzahl nicht näher dargestellter Permanentmagnete auf und ist mittels einer Welle 16 drehbar um eine Rotationsachse 18 gelagert. Hierfür ist der Rotor 14 drehfest an der Welle 16 angebunden, die mittels nicht näher dargestellter Kugellager drehbar um die Rotationsachse 18 gelagert ist. Die Welle 16 ist im Wesentlichen zylindrisch ausgestaltet und der Stator 12, der Rotor 14 sowie die Welle 16 sind konzentrisch zueinander angeordnet.

Die Welle 16 erstreckt sich entlang einer Axialrichtung A, die parallel zur Rotationsachse 18 ist und ragt aus dem Gehäuse 4 hinaus. An diesem Ende der Welle 16 ist eine Nabe 20 eines Drehflügelrotors 22 drehfest angebunden. An der Nabe 20 selbst sind Flügel 24 angebunden, die sich bezüglich der Rotationsachse 18 in einer Radialrichtung R erstrecken. Die Windkraftanlage 2 weist ferner einen Umrichter 26 auf, der auf dem Erdboden 8 angebracht ist und der mittels einer elektrischen Leitung 28 elektrisch mit der elektrischen Maschine 10 kontaktiert ist.

Bei Betrieb wird der Drehflügelrotor 22 aufgrund eines herrschenden Windes in eine Rotationsbewegung um die Rotationsachse 18 versetzt. Infolgedessen wird die Welle 16 sowie der Rotor 14 um die Rotationsachse 18 rotiert. Die Permanentmagneten des Rotors 14 induzieren in dem Stator 12 eine elektrische Spannung, welche mittels der elektrischen Leitung 28 an dem Umrichter 26 angelegt wird. Mittels des Umrichters 26 wird die elektrische Spannung, auf einen bestimmten Wert transformiert, und der resultierende elektrische Strom wird in ein nicht näher dargestelltes Stromnetzwerk eingespeist. In weiteren Alternativen ist die elektrische Maschine 10 ein Bestandteil einer Spritzgussmaschine, eines Antrieb einer Industrieanlage, eines Förderantriebs, eines sonstigen Antriebs oder eines Kraftfahrzeugs.

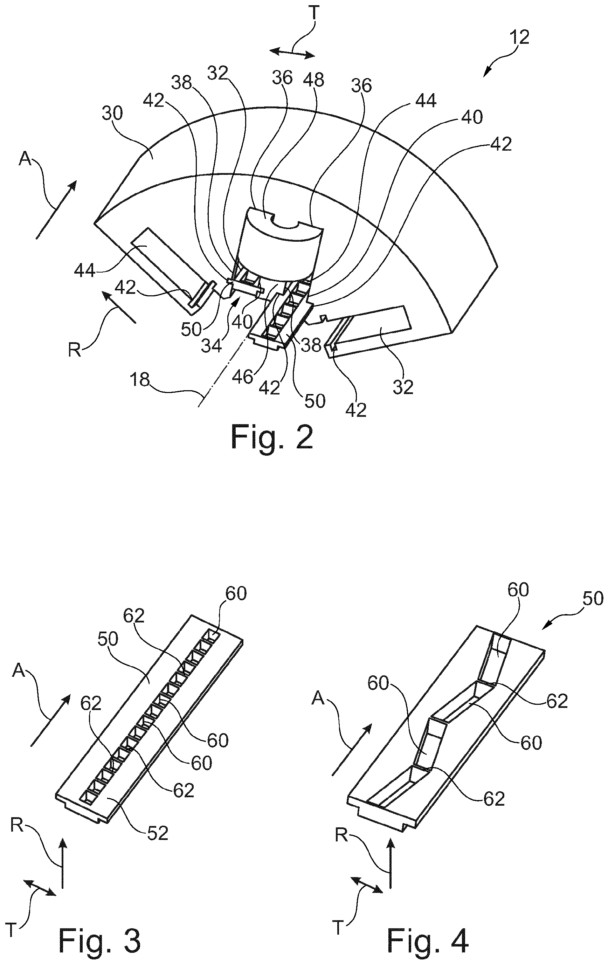

In Fig. 2 ist ausschnittsweise perspektivisch und vereinfacht der Stator 12 dargestellt, der ein erstes Blechpaket 30 aufweist. Dieses umfasst nicht näher dargestellte Einzelbleche, die in Axialrichtung A bündig aufeinander gestapelt und stanzpaketiert sind. Mit anderen Worten weist jedes der Bleche des ersten Blechpakets 30 die gleiche Form, zumindest jedoch den gleichen Querschnitt senkrecht zur Rotationsachse 18 auf. Die einzelnen Bleche des ersten Blechpakets 30 sind aus Elektroblech gefertigt und gegeneinander elektrisch isoliert. Das erste Blechpaket 30 weist eine im Wesentlichen hohlzylindrische Gestalt auf und ist konzentrisch zur Rotationsachse 18 angeordnet.

Das erste Blechpaket 30 weist an dessen radialer Innenseite eine sich in Axialrichtung A erstreckende und im Wesentlichen in Radialrichtung R verlaufende Nut 32 auf. Die Nut 32 weist eine Öffnung 34 auf, die auf die Rotationsachse 18 zu gerichtet ist. Auf der Öffnung 34 gegenüberliegender Seite umfasst die Nut 32 einen Boden 36. Der Boden 36 ist bezüglich der Öffnung 34 in Radialrichtung R versetzt. Der Querschnitt der Nut 32 senkrecht zur Rotationsachse 18 ist im Wesentlichen rechteckförmig. Auch ist der Querschnitt der Nut 32 senkrecht zur Radialrichtung R rechteckförmig.

Die Nut 32 weist eine sich in Axialrichtung A erstreckende erste Seitenwand 38 sowie eine sich in Axialrichtung A erstreckende zweite Seitenwand 40 auf, die jeweils im Bereich der Öffnung 34 eine sich ebenfalls in Axialrichtung A erstreckende und jeweils in eine Tangentialrichtung T verlaufende Vertiefung 42 aufweisen. Die Vertiefungen 42 sind hierbei von dem Inneren der Nut 32 weg gerichtet, und weisen jeweils den gleichen Abstand zum Boden 36 der Nut 32 in Radialrichtung R auf. Die Vertiefungen 42 weisen jeweils einen im Wesentlichen rechteckförmigen, beispielsweise quadratischen, Querschnitt auf und sind nutförmig ausgestaltet.

Das erste Blechpaket 30 weist ferner eine sich in Axialrichtung A erstreckende zweite Nut 44 auf, die parallel zur Nut 32 verläuft, und die im Wesentlichen baugleich zu der Nut 30 ist. So weist auch die zweite Nut 44 den Boden 36 sowie die erste Seitenwand 38 und die zweite Seitenwand 40 auf, die jeweils die nutförmige Vertiefung 42 umfassen, die sich jeweils in Axialrichtung A erstrecken. Zwischen der Nut 32 und der zweiten Nut 44 weist das erste Blechpaket 30 einen Zahn 46 auf, der exakt, oder zumindest fast exakt (+/-5°, 2°, 1°, 0,5°, 0°),in Radialrichtung R verläuft, und dessen Begrenzung in Tangentialrichtung T mittels der zweiten Seitenwand 40 der Nut 32 sowie der ersten Seitenwand 38 der zweiten Nut 44 gebildet ist. Auf den Zahn 46 ist eine elektrische Spule 48 gesteckt. Mit anderen Worten ist der Zahn 46 mittels der elektrischen Spule 48 umwickelt. Folglich liegt die elektrische Spule 48, die aus einem Kupferlackdraht erstellt ist, teilweise innerhalb der Nut 32 sowie teilweise innerhalb der zweiten Nut 44 ein. Die elektrische Spule 48 ist hierbei in direktem mechanischem Kontakt mit dem Boden 36 der Nut 32 bzw. der zweiten Nut 44. Derjenige Teil der elektrischen Spule 48, der in keiner der beiden Nuten 32,44 einliegt, steht in Axialrichtung A über das erste Blechpaket 30 über und ist im Wesentlichen U-förmig umgebogen.

Das erste Blechpaket 30 weist insgesamt, wie hier beispielsweise gezeigt ist, acht derartige Nutpaare auf, die mittels der Nut 32 sowie der zweiten Nut 44 und dem dazwischen angeordneten Zahn 46 gebildet sind, und die in Tangentialrichtung T zueinander beabstandet sowie drehsymmetrisch bezüglich der Rotationsachse 18 angeordnet sind. Auch umfasst der Stator 12 insgesamt acht derartige elektrische Spulen 48. Die Anzahl der Spulen 48 ist gleich der Anzahl der Nutpaare. Die Zähne 46, die elektrischen Spulen 48 sowie die Nuten 32,44 sind drehsymmetrisch bezüglich der Rotationsachse 18 angeordnet. Mit anderen Worten ist zwischen jeweils benachbarten Zähnen 46 ein Winkel von 45° gebildet, dessen Scheitelpunkt auf der Rotationsachse 18 liegt.

Der Stator 12 weist ferner - ebenfalls beispielhaft - sechzehn Nutverschlüsse 50 auf, wobei jeder Nut 32 sowie jeder zweiten Nut 44 jeweils einer der Nutverschlüsse 50 zugeordnet ist. Mittels jedes Nutverschlusses 50 ist die zugeordnete Nut 32 bzw. die zweite Nut 44 zumindest teilweise verschlossen. Zur Montage wird hierbei der jeweilige Nutverschluss 50 in Axialrichtung A in die Vertiefungen 42 der jeweiligen Nut 32, 44 eingeschoben, wobei zwischen diesen eine Spielpassung oder eine Presspassung erstellt wird.

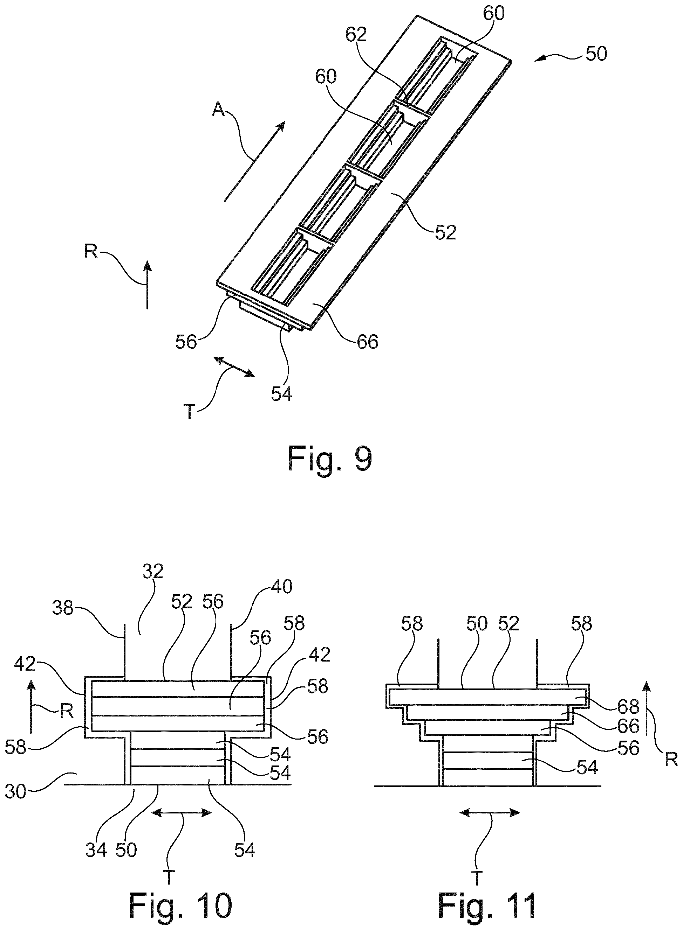

Der Nutverschluss 50 ist in Fig. 3 perspektivisch und in Fig. 10 im Montagezustand in einer Schnittdarstellung senkrecht zur Rotationsachse 18 gezeigt. Der Nutverschluss 50 weist ein zweites Blechpaket 52 auf, welches exemplarisch drei erste Bleche 54 und drei zweite Bleche 56 umfasst. Die drei ersten Bleche 54 sind in Radialrichtung R übereinander gestapelt und aneinander festgelegt, ebenso wie die drei zweiten Bleche 56. Die beiden auf diese Weise gebildeten Stapel sind zu dem zweiten Blechpaket 52 aneinandergefügt. Folglich besteht das zweite Blechpaket 52 aus in Radialrichtung R gestapelter Bleche 54,56, die mittel Stanzpaketierung oder Kleben aneinander festgelegt sind. Sämtliche Bleche 54,56 sind aus demselben Material gefertigt wie die Bleche des ersten Blechpakets 30. Die ersten Bleche 54 weisen jeweils eine erste Form und die zweiten Bleche 56 jeweils eine zweite Form auf, wobei sich die beiden Formen im Wesentlichen lediglich aufgrund der Ausdehnung in Tangentialrichtung T unterscheiden.

Die zweiten Bleche 56 weisen eine größere Ausdehnung in Tangentialrichtung T auf, als die ersten Bleche 54 und stehen in Tangentialrichtung T symmetrisch über die ersten Bleche 54 über. Die zweiten Bleche 56 sind bezüglich der ersten Bleche 54 von der Nutöffnung 34 in Richtung des Bodens 36 der jeweiligen Nut 32,44 versetzt und liegen an deren radialem Ende in der jeweiligen Vertiefung 42 ein. Die ersten Bleche 54 grenzen in Tangentialrichtung T an die erste Seitenwand 38 sowie die zweite Seitenwand 40 in dem Bereich an, der nicht die Vertiefung 42 aufweist. Die ersten Bleche 54 reichen bis zum Ende der jeweiligen Nut 32,44 in Radialrichtung R, welches dem Boden 36 gegenüberliegt, also bis zu deren Nutöffnung 34. Das zweite Blechpaket 52 ist bündig mit dem radialen innenliegenden Ende des Blechpakets 30, zumindest auf Seiten des Zahns 46.

Der Nutverschluss 50 umfasst ferner eine elektrische Isolierung 58, die an dem zweiten Blechpaket 52 befestigt ist, und die beispielsweise aus einem Kunststoff oder einem Lack besteht. Die elektrische Isolierung 58 ist auf das zweite Blechpaket 52 aufgetragen und bildet den einzigen direkten mechanischen Kontakt zwischen dem ersten Blechpaket 30 und dem Nutverschluss 50. Mit anderen Worten ist das zweite Blechpaket 52 mittels der elektrischen Isolierung 58 von dem ersten Blechpaket 30 elektrisch isoliert. Die elektrische Isolierung 58 ist partiell auf das zweite Blechpaket 52 aufgetragen und befindet sich nur an den Oberflächen des zweiten Blechpakets 52, die der ersten Seitenwand 38 bzw. der zweiten Seitenwand 40 direkt zugewandt sind. Der Nutverschluss 50 besteht aus dem zweiten Blechpaket 52 und der elektrischen Isolierung 58.

Der Nutverschluss 50 weist - ebenfalls beispielhaft - sechzehn in Radialrichtung R verlaufende Aussparungen 60 auf, die durch den Nutverschluss 50 vollständig hindurch reichen. Die Aussparungen 60 weisen hierbei senkrecht zur Radialrichtung R einen quader- oder rechteckförmigen Querschnitt auf, wobei - sofern der Querschnitt rechteckförmig ist - sich die Aussparungen 60 in Axialrichtung A erstrecken. Mit anderen Worten sind die Begrenzungskanten des quaderförmigen Querschnitts parallel oder senkrecht zur Axialrichtung A. Die einzelnen Aussparungen 60 sind mittels Stegen 62 voneinander beabstandet, die im Wesentlichen in Tangentialrichtung T verlaufen.

Aufgrund des Nutverschlusses 50 wird das die elektrische Spule 48 durchsetzende Magnetfeld geeignet geformt, wozu hauptsächlich das zweite Blechpaket 52 beiträgt. Mittels der elektrischen Isolierung 58 wird ein elektrischer Kurzschluss der einzelnen Bleche des ersten Blechpakets 30 sowie des zweiten Blechpakets 52 unterbunden, innerhalb derer Wirbelströme induziert werden. Aufgrund der Aussparungen 60 kann ein Rastmoment des Rotors 14 reduziert werden.

In Fig. 4 ist eine weitere Ausgestaltungsform des Nutverschlusses 50 dargestellt, wobei lediglich die Aussparungen 60 abgeändert sind. Der Nutverschluss 50 weist nunmehr lediglich vier derartige Aussparungen 60 auf, die in Axialrichtung A zueinander beabstandet und mittels sich in Tangentialrichtung T erstreckender Stege 62 voneinander getrennt sind. Die Aussparungen 60 verlaufen weiterhin in Radialrichtung R. Nunmehr erstrecken sich die Aussparungen 60 jedoch schräg zur Axialrichtung A. Mit anderen Worten weist die Erstreckungsrichtung jeder der Aussparungen 60 sowohl eine Komponente in Axialrichtung A als auch in Tangentialrichtung T auf. Hierbei sind die Aussparungen 60 derart angeordnet, dass diese ein Zickzackmuster bilden. Aufgrund der schrägen Erstreckung ist ein Rastmoment des Rotors 14 reduziert. Auch weist der Rotor 14 in diesem Beispiel vier in Axialrichtung benachbart angeordnete Permanentmagneten auf, wobei jeweils eine der Aussparungen 60 in Radialrichtung R oberhalb jeweils eines der Permanentmagneten angeordnet ist. Diese vier Permanentmagneten sind zueinander vorzugsweise nicht in Tangentialrichtung T versetzt.

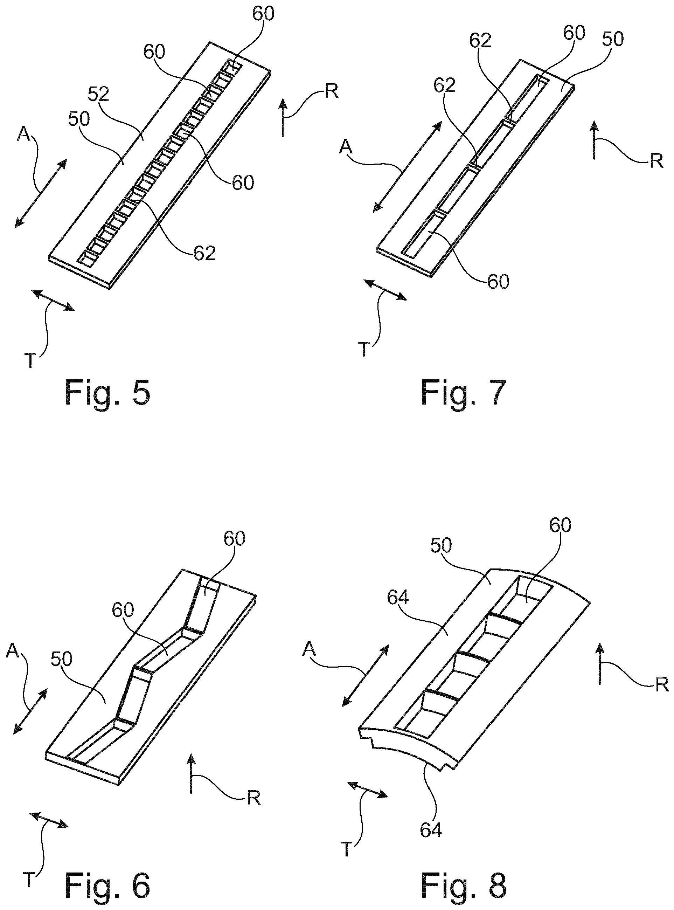

In Fig. 5 ist eine weitere Ausgestaltungsform des Nutverschlusses 50 dargestellt. Im Vergleich zum Nutverschluss 50, der in Fig. 3 gezeigt ist, weist das zweite Blechpaket 52 dieses Nutverschlusses 50 keine ersten Bleche 54 auf und umfasst lediglich die zweiten Bleche 56, die im Montagezustand wiederum in der Vertiefung 42 der jeweiligen Nut 32,44 an deren jeweiligem Ende in Tangentialrichtung T einliegen. Bei dieser Ausgestaltungsform sind Herstellungskosten reduziert, und eine Lagerhaltung ist vereinfacht.

In Fig. 6 ist eine weitere Ausgestaltungsform des Nutverschlusses 50 dargestellt. Im Vergleich zu dem in Fig. 4 gezeigten Ausführungsbeispiel weist auch dieser Nutverschluss 50 keine ersten Bleche 54 auf, und das zweite Blechpaket 52 ist lediglich mittels der zweiten Bleche 56 gebildet, ebenso wie die in Fig. 5 gezeigte Ausführungsform.

In Fig. 7 ist eine weitere Ausgestaltungsform des Nutverschlusses 50 gezeigt. Im Vergleich zu der in Fig. 6 gezeigten Ausführungsform verlaufen die vier Aussparungen 60 in Axialrichtung A und es ist folglich kein Zickzackmuster gebildet. Aufgrund dessen ist ein Rastmoment des Rotors 14 erhöht. Um dennoch das Rastmoment des Rotors 14 zu erlangen, welches mittels der in Fig. 6 gezeigten Ausführungsform erlangt wird, sind beispielsweise die vier Permanentmagneten in Tangentialrichtung T zueinander versetzt. Bei der in Fig. 7 gezeigten Ausführungsform sind die vier Permanentmagneten somit sowohl in Axialrichtung A als auch in Tangentialrichtung T zueinander versetzt.

In Fig. 8 ist eine weitere Ausgestaltungsform des Nutverschlusses 50 gezeigt, bei der die vier Aussparungen 60 im Vergleich zu der in Fig. 4 gezeigten Ausführungsform in Axialrichtung A verlaufen, ebenso wie bei der in Fig. 6 dargestellten Ausführungsform. Ferner sind die den Nutverschluss 50 in Radialrichtung R begrenzenden Oberflächen 64 gewölbt und jeweils mittels eines Kreissegments gebildet, dessen Mittelpunkt auf der Rotationsachse 18 liegt. Folglich ist die Oberfläche 64 die von der elektrischen Spule weg weist, gewölbt ausgeführt. Somit weist ein zwischen dem Stator 12 und dem Rotor 14 gebildeter Luftspalt im Wesentlichen eine konstante Dicke in Radialrichtung R auf.

In Fig. 9 ist eine weitere Ausgestaltungsform des Nutverschlusses 50 perspektivisch dargestellt. Das zweite Blechpaket 52 weist die ersten Bleche 54 sowie die zweiten Bleche 56 auf, die in Radialrichtung R aufeinander gestapelt sind. Ferner weist das zweite Blechpaket 52 vier dritte Bleche 66 auf, die im Vergleich zu den zweiten Blechen 56 eine in Tangentialrichtung T vergrößerte Ausdehnung aufweisen. Hierbei stehen die dritten Bleche 66 symmetrisch in Tangentialrichtung T über die zweiten Bleche 56 über, genau wie diese symmetrisch über die ersten Bleche 54 in Tangentialrichtung T überstehen. Folglich weist der Nutverschluss 50 in Tangentialrichtung T ein dreifach gestuftes Ende auf. Auch sind die sich in Axialrichtung A erstreckenden vier Aussparungen 60 in Tangentialrichtung T randseitig gestuft ausgeführt. Aufgrund der Stufen kann das die elektrische Spule 48 durchsetzendes Magnetfeld geeignet geformt werden.

In Fig. 11 ist eine letzte Ausführungsform des Nutverschlusses 50 gemäß Fig. 10 dargestellt. Das zweite Blechpaket 52 weist exemplarisch drei erste Bleche 54, ein zweites Blech 56, ein drittes Blech 66 sowie ein viertes Blech 68 auf, wobei deren Ausdehnung in Tangentialrichtung T sukzessive zunimmt, und die jeweils symmetrisch beidseitig überstehen. Folglich weist der Nutverschluss 50 in Tangentialrichtung T ein weiter abgestuftes Ende auf. Aufgrund der Stufenform ist der Nutverschluss 50 innerhalb der Vertiefungen 42 weiter stabilisiert. Sämtliche vorher gezeigten Ausführungsformen können die vier unterschiedlichen Bleche 54, 56, 66, 68 aufweisen. So weist die in Fig. 11 gezeigte Ausführungsform des Nutverschlusses 50 beispielsweise die Anordnung und Ausformung der Aussparungen 60 auf, die in Fig. 5, 6, 7 oder 9 gezeigt ist. Alternativ oder in Kombination hierzu sind die Oberflächen 64 gewölbt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Windkraftanlage
- 4: Gehäuse
- 6: Mast
- 8: Erdboden
- 10: elektrische Maschine
- 12: Stator
- 14: Rotor
- 16: Welle
- 18: Rotationsachse
- 20: Nabe
- 22: Drehflügelrotor
- 24: Flügel
- 26: Umrichter
- 28: elektrische Leitung
- 30: erstes Blechpaket
- 32: Nut
- 34: Öffnung
- 36: Boden
- 38: erste Seitenwand
- 40: zweite Seitenwand
- 42: Vertiefung
- 44: zweite Nut
- 46: Zahn
- 48: elektrische Spule
- 50: Nutverschluss
- 52: zweites Blechpaket
- 54: erstes Blech
- 56: zweites Blech
- 58: elektrische Isolierung
- 60: Aussparung
- 62: Steg
- 64: Oberfläche
- 66: drittes Blech

- A: Axialrichtung
- R: Radialrichtung
- T: Tangentialrichtung

## Patentansprüche

1. Elektrische Maschine (10) mit einem in eine Axialrichtung (A) gestapelten ersten Blechpaket (30), das eine sich in Axialrichtung (A) erstreckende Nut (32) aufweist, innerhalb derer zumindest teilweise eine elektrische Spule (48) angeordnet ist, und die mittels eines Nutverschlusses (50) zumindest teilweise verschlossen ist, wobei der Nutverschluss (50) ein in eine Radialrichtung (R) gestapeltes zweites Blechpaket (52) aufweist.

2. Elektrische Maschine (10) nach Anspruch 1,
**dadurch gekennzeichnet,**
**dass** der Nutverschluss (50) eine elektrische Isolierung (58) aufweist, mittels derer das erste Blechpaket (30) und das zweite Blechpaket (52) elektrisch isoliert sind.

3. Elektrische Maschine (10) nach Anspruch 1 oder 2,
**dadurch gekennzeichnet,**
**dass** die Nut (32) eine sich in Axialrichtung (A) erstreckende Vertiefung (42) aufweist, in die der Nutverschluss (50) eingeschoben ist.

4. Elektrische Maschine (10) nach einem der Ansprüche 1 bis 3,
**dadurch gekennzeichnet,**
**dass** der Nutverschluss (50) eine in Radialrichtung (R) verlaufende Aussparung (60) aufweist.

5. Elektrische Maschine (10) nach Anspruch 4,
**dadurch gekennzeichnet,**
**dass** die Aussparung (60) sich schräg zur Axialrichtung (A) erstreckt.

6. Elektrische Maschine (10) nach einem der Ansprüche 1 bis 5,
**dadurch gekennzeichnet,**
**dass** das zweite Blechpaket (52) ein erstes Blech (54) mit einer ersten Form und ein zweites Blech (56) mit einer zweiten Form aufweist.

7. Elektrische Maschine (10) nach Anspruch 6,
**dadurch gekennzeichnet,**
**dass** das zweite Blech (56) eine größere Ausdehnung in eine Tangentialrichtung (T) aufweist als das erste Blech (54).

8. Elektrische Maschine (10) nach einem der Ansprüche 1 bis 7,
**dadurch gekennzeichnet,**
**dass** der Nutverschluss (50) eine von der elektrischen Spule (48) wegweisende gewölbte Oberfläche (64) aufweist.

9. Elektrische Maschine (10) nach einem der Ansprüche 1 bis 8,
**gekennzeichnet durch**
einen das erste Blechpaket (30) aufweisenden Stator (12).

10. Elektrische Maschine (10) nach einem der Ansprüche 1 bis 9,
**dadurch gekennzeichnet,**
**dass** das erste Blechpaket (30) eine sich in Axialrichtung (A) erstreckende zweite Nut (44) aufweist, innerhalb derer zumindest teilweise die elektrische Spule (48) angeordnet ist, wobei die Nut (32) und die zweite Nut (44) jeweils teilweise mittels eines Zahns (46) begrenzt sind, auf den die elektrische Spule (48) gesteckt ist.
